# FASCICULE DE BREVET EUROPEEN

(11) **EP 0 681 687 B1**
(45) Date de publication et mention de la délivrance du brevet: **10.09.1997**
(21) Numéro de dépôt: 94905163.5
(22) Date de dépôt: 27.01.1994
(51) Int. Cl.: G01G 19/44

(54) **DISPOSITIF DE PESEE D'UNE PERSONNE ALITEE**
VORRICHTUNG ZUM WIEGEN EINER BETTLAGERIGEN PERSON
DEVICE FOR WEIGHING BEDRIDDEN PERSONS

(30) Priorité: 28.01.1993 FR 9301252
(43) Date de publication de la demande: 15.11.1995
(73) Titulaire: CENTRE STEPHANOIS DE RECHERCHES MECANIQUES HYDROMECANIQUE ET FROTTEMENT Société anonyme, F-42166 Andrezieux Boutheon Cédex (FR)
(72) Inventeur: BERGER, Antoine, F-42270 Saint-Victor-sur-Loire (FR); ESTEVENY, Serge, F-42170 Saint-Just-Saint-Rambert (FR)
(74) Mandataire: Thivillier, Patrick
(86) Numéro de dépôt international: FR9400099
(87) Numéro de publication internationale: WO9417376

(56) Documents cités:
- EP-A- 0 322 994
- GB-A- 2 207 251
- US-A- 2 644 332
- PATENT ABSTRACTS OF JAPAN vol. 12, no. 488 (P-803)(3335) 20 Décembre 1988 & JP-A-63 201 535 (EE & D K.K.) 19 Aout 1988

## Description

L'invention concerne plus particulièrement la pesée des personnes en réanimation et plus généralement la pesée des personnes ne pouvant se lever et/ou se déplacer.

Pour le traitement de certaines maladies, il est nécessaire de surveiller l'évolution du poids du patient, en faisant des relevés journaliers. Compte-tenu de l'état du patient, c'est-à-dire de son immobilisation dans le lit, différentes solutions sont employées à ce jour.

La solution la plus employée consiste à soulever le patient de son lit en le suspendant à une potence, au moyen d'un système de sangles assujetti à des capteurs de mesure. On conçoit que cette solution est d'une mise en oeuvre délicate et peut présenter un certain danger pour le patient.

En outre, le temps de pesée est très long, compte-tenu des nombreuses manipulations qu'il convient d'effectuer.

Une autre solution consiste à placer sous les pieds du lit, un système permettant de peser l'ensemble du lit avec le patient. Là encore, la solution n'est pas satisfaisante, étant donné que le système de pesée ne peut pas être installé à demeure. De même et surtout, des risques d'erreur au niveau de la mesure sont importants, étant donné que certains accessoires peuvent être rajoutés par rapport à la pesée initiale, de sorte que la tare est modifiée.

On connaît également des lits intégrant des capteurs de mesure, comme par exemple décrits dans GB-A-2 207 251, EP-A-0 122 994 et US-A-2 644 332. Si les résultats obtenus sont satisfaisants, ce type de lit est d'une conception technologique très compliquée et d'un coût élevé par rapport aux lits généralement utilisés. En effet, ces lits intègrent d'autres éléments qui ne sont pas nécessairement utilisés en fonction du cas patologique à traiter.

L'invention s'est fixée pour but de remédier à ces inconvénients, de manière simple, sûre, efficace et rationnelle.

Ce problème de pesée est d'autant plus délicat, que les lits présentent un sommier articulé généralement en au moins trois parties. Or, l'opération de pesée doit s'effectuer en position horizontale ou sensiblement horizontale du patient. On conçoit qu'il n'est pas possible, bien évidemment, de supprimer ces possibilités d'articulations du sommier.

Le problème que se propose de résoudre l'invention est d'assurer la pesée d'une personne alitée en ayant pour objectif, d'une part, de ne pas soulever le patient du lit et, d'autre part, de pouvoir articuler à volonté le sommier du lit.

Pour résoudre un tel problème, il a été conçu et mis au point un dispositif de pesée qui comprend plusieurs modules accouplés de manière articulée pour épouser très sensiblement la forme géométrique d'un sommier articulé, chaque module étant équipé d'au moins un capteur de mesure apte à réaliser, en combinaison, la fonction de pesage.

Un autre problème que se propose de résoudre l'invention est de reprendre les efforts de couple provoqués par le non alignement de l'effort appliqué avec le capteur de mesure, afin d'obtenir une pesée la plus précise possible.

Un tel problème est résolu en équipant chaque module de plusieurs capteurs, chaque capteur étant fixé de manière rigide sur un élément support, lui même fixé sur le module correspondant, avec capacité de micro-déplacement et de micro-rotation.

Cette capacité de micro-déplacement et de micro-rotation permet de créer les conditions d'un appui libre afin de ne soumettre les capteurs qu'aux efforts verticaux dûs au poids, en éliminant l'action des forces internes provoqués par la déformation des éléments de liaison tel que flexion sous la charge, dilatation...

Pour résoudre le problème posé d'assurer le pesage, chaque module est constitué par deux coques indépendantes emboitables, l'une prenant appui sur le sommier, l'autre recevant le matelas, les éléments supports des capteurs étant fixés entre les deux coques.

Chaque élément support des capteurs est en deux parties indépendantes, fixées d'une manière rigide de part et d'autre du capteur, chacune de ces parties étant solidaire avec capacité de micro-déplacements et de micro-rotations de la coque correspondante du module considéré.

Dans le cadre de l'utilisation de ce dispositif, il est souvent intéressant que la plus grande surface possible soit perméable au passage des rayons X ou autres rayonnements, c'est-à-dire qu'une telle surface soit exempt de toute partie métallique.

Dans ce but, afin de dégager la totalité de la surface des modules des pièces métalliques, chaque module comprend deux capteurs disposés longitudinalement à proximité de ses bords latéraux, les coques supérieure et inférieure étant réalisées en matière plastique.

Pour résoudre le problème posé d'assurer la liaison et l'articulation des modules entre eux, tout en permettant de transmettre les informations de mesure, les modules sont reliés par des bandes souples.

Compte-tenu de l'application du dispositif à un lit équipé d'un sommier articulé, ce dernier comprend un module correspondant à la tête du sommier, un module correspondant au pied du sommier et un ou plusieurs modules correspondant à la ou aux parties reliant la tête et les pieds du sommier.

Pour résoudre le problème posé d'obtenir une fixation des coques par rapport aux capteurs d'une manière souple avec capacité de micro-déplacement et de micro-rotation, les parties constitutives de chaque élément support de capteur sont fixés sur les coques au moyen d'une liaion constituée par un matériau viscoélastique de faible raideur. Ce matériau peut être une mousse de caoutchouc ou de matière synthétique. Dans ce cas, la liaison peut être réalisé avantageusement d'un ruban adhésif double face.

L'invention est exposée, ci-après plus en détail à l'aide des dessins annexés, dans lesquels :

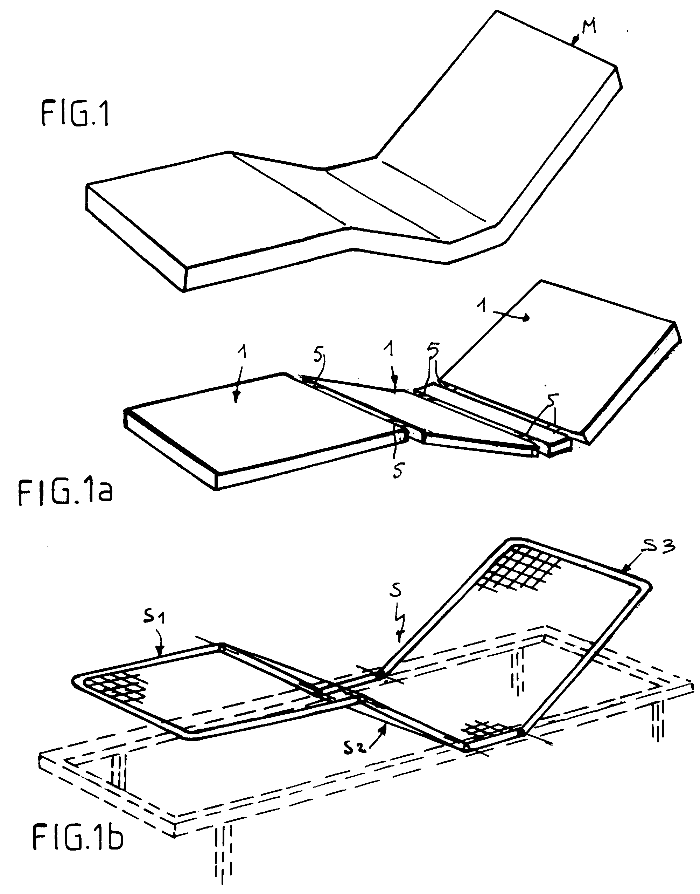

La figure 1 est une vue en perspective montrant le dispositif avant montage au niveau d'un sommier articulé.

La figure 2 est une vue en plan du dispositif montrant les coques inférieures des modules.

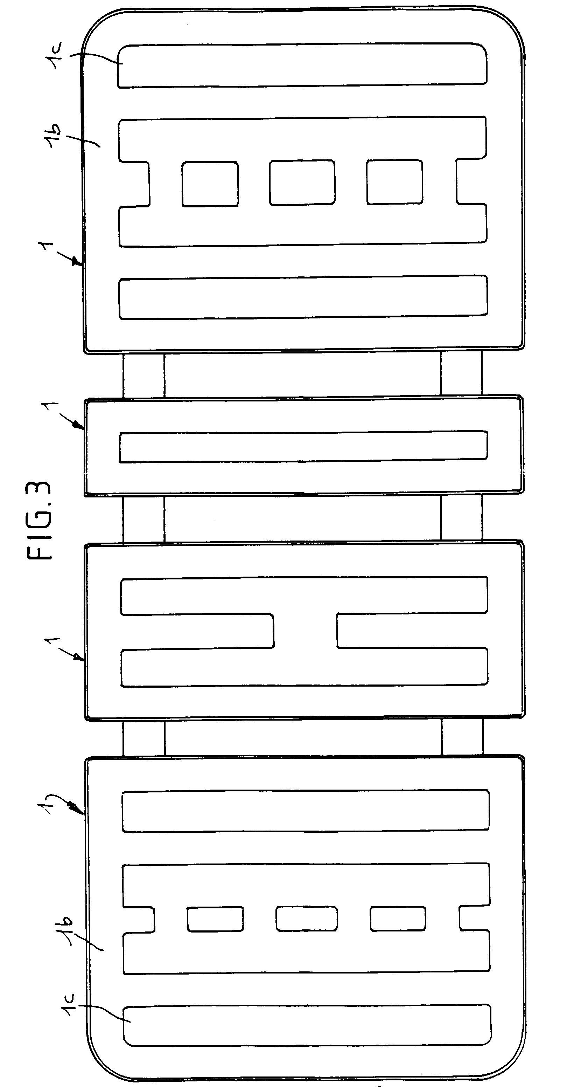

La figure 3 est une vue de dessus du dispositif.

La figure 4 est une vue en coupe transversale considérée selon la ligne 4.4 de la figure 3.

La figure 5 est une vue coupe longitudinale considérée selon la ligne 5.5 de la figure 3.

La figue 6 montre la possibilité de pliage du dispositif.

Le dispositif de pesée s'applique à tout type de lit équipé d'un sommier articulé désigné dans son ensemble par (S). Ce sommier (S) peut par exemple être constitué de quatre parties articulées (S1) (S2) (S3) (S4), les parties (S1) et (S4) constituant respectivement la tête et les pieds du sommier. Sur ce sommier est disposé un matelas (M). Le dispositif de pesée selon l'invention, est disposé directement sur le sommier (S), tandis que le matelas (M) est disposé directement sur le dispositif de pesée.

Le dispositif comprend plusieurs modules (1), accouplés de manière articulée pour épouser très sensiblement la forme géométrique du sommier (S). Chaque module (1) est équipé d'au moins un capteur de mesure (2). Plus particulièrement, chaque module (1) est composé de deux coques indépendantes emboitables (1a) (1b). Les coques (1a) constituent les parties d'assise et sont destinées à prendre appui directement sur le sommier, tandis que les coques (1b) constituent les parties d'appui et reçoivent le matelas (M). Les coques (1a) et (1b) sont de forme générale quadrangulaire pour correspondre très sensiblement à chacune des parties constitutives (S1) (S2) (S3) (S4) du sommier (S). Chaque coque (1a) et (1b) peut être réalisée par moulage d'une matière plastique et peut présenter directement, lors de sa fabrication, des nervures de rigidité (1c) (1d). La coque supérieure (1b) est de dimensions très légèrement supérieures aux dimensions de la coque inférieure (1a).

Chaque coque (1a) et (1b) présente un rebord périphérique (1a1) (1b1), de sorte qu'après emboitement, le rebord (1b1) est en superposition du rebord (1a1). A noter que les modules d'extrémité qui correspondent respectivement à la tête et aux pieds du sommier, sont très sensiblement de mêmes dimensions, tandis que les modules intermédiaires sont de dimensions réduites.

Entre les deux coques (1a) et (1b) sont fixés les capteurs (2), afin de réaliser l'opération de pesage, compte-tenu de l'indépendance des deux coques. Dans ce but, chaque capteur (2) est fixé de manière rigide sur un élément support (3), lui même fixé sur le module correspondant (1), avec capacité de micro-déplacements.

Dans la forme de réalisation illustrée, chaque élément support (3) est en deux parties indépendantes (3a) et (3b). Ces deux parties sont fixées d'une manière rigide, de part et d'autre du capteur (2), par tout moyen connu et approprié tel que vis. Par contre, chacune des parties (3a) et (3b) est fixée sur la coque correspondante (1a) et (1b), d'une manière souple, avec capacité de micro-déplacements et de micro-rotations. Par exemple, les parties (3a) et (3b) sont fixées au moyen d'un adhésif double face (4).

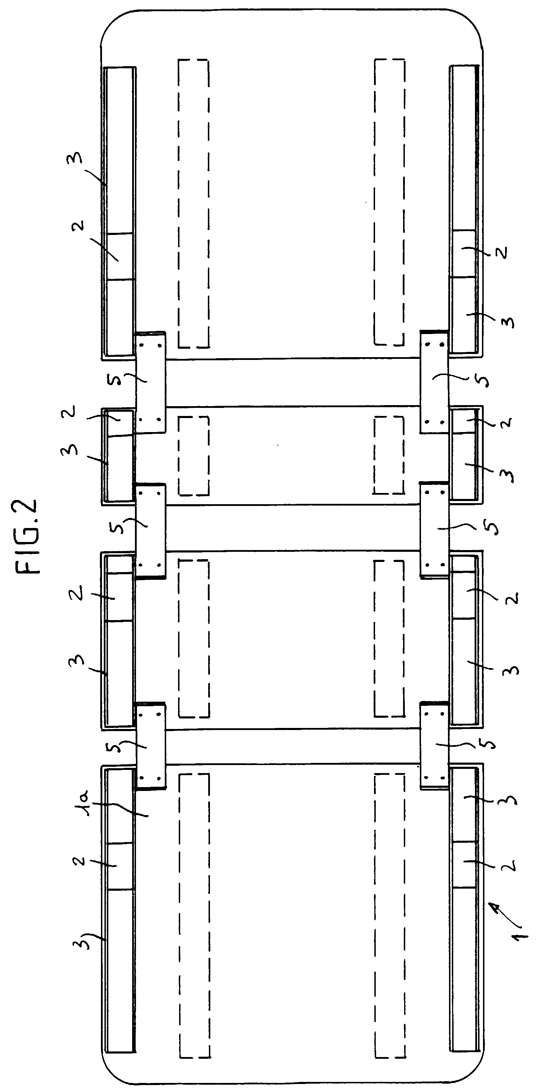

Ces parties d'éléments support (3a) et (3b) sont constituées par des fers profilés de section transversale en U et sont fixés dans les conditions indiquées, le long des bords latéraux internes de chaque module (figure 2).

Compte-tenu de ces dispositions, les différents modules (1), tels que décrits, et équipés des capteurs (2), sont reliés par des bandes souples (5). Ces bandes sont disposées à proximité des bords latéraux des coques inférieures (1a), en faisant office de charnière entre deux modules consécutifs. Sur ces bandes souples (5) peuvent être fixés les conducteurs de liaison électrique entre les différents capteurs (2).

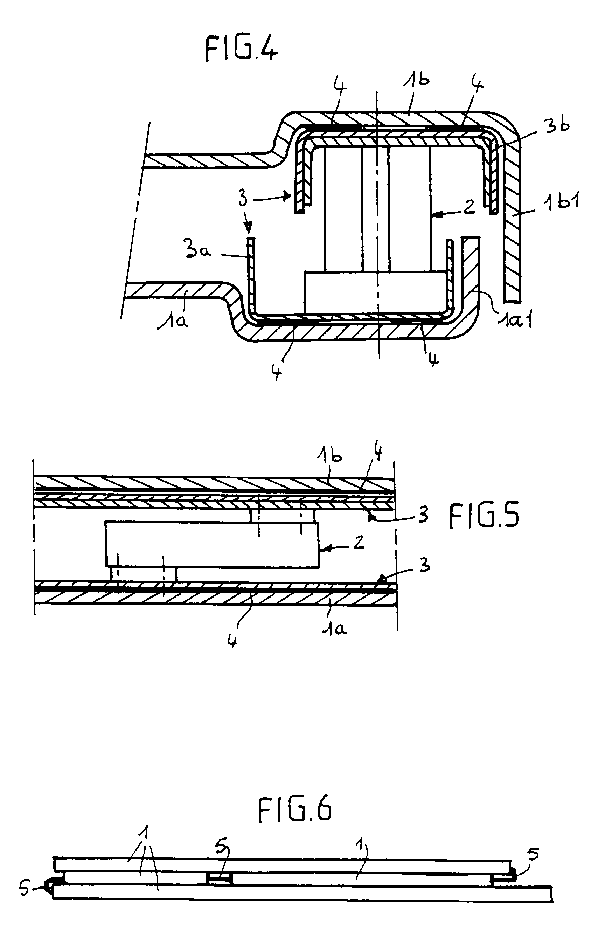

Cette articulation des modules permet de replier l'ensemble du dispositif dans un volume très réduit, étant donné que les modules (1) peuvent être superposés (figure 6).

Pour procéder à l'opération de pesage, le sommier (S) est disposé de sorte que ses différentes parties constitutives (S1) (S2) (S3) (S4) sont positionnées très sensiblement selon un plan horizontal. Les différents modules (1) ont donc la même position dans l'espace que le sommier (S). Le poids du patient repose donc en totalité sur l'ensemble des modules et plus particulièrement des coques supérieures (1b) pour être ainsi pris en compte par les différents capteurs de mesure (2). Ces derniers sont assujettis à tout système électronique de commande ou autre, pour donner toute information sur la pesée effectuée, ce système électronique peut être conformé pour donner, par exemple :
- Le poids du patient (avec défalcation de la tare : matelas - draps)
- L'évolution du poids du patient
- Le poids relevé par chacun des modules et son évolution.

On prévoit d'équiper certaines ou la totalité des coques inférieures (1a), d'éléments d'anti-glissement tels que des pieds en caoutchouc, afin de maintenir en position d'appui le dispositif sur le sommier.

Les avantages ressortent bien de la description, en particulier on souligne et on rappelle :
- la simplicité de réalisation,
- la précision de la mesure obtenue,
- la possibilité d'adapter le dispositif à tout type de sommier articulé,
- la possibilité de procéder au pesage, sans soulever le patient du lit.

## Revendications

1. Dispositif de pesée d'une personne alitée, caractérisé en ce qu'il comprend plusieurs modules (1) accouplés de manière articulée pour épouser très sensiblement la forme géométrique d'un sommier articulé, chaque module (1) étant équipé d'au moins un capteur de mesure (2) apte à réaliser, en combinaison, la fonction de pesage.

2. Dispositif selon la revendication 1, caractérisé en ce que chaque module est équipé de plusieurs capteurs (2), chaque capteur (2) étant fixé de manière rigide sur un élément support (3) fixé sur le module correspondant (1), avec capacité de micro-déplacements et de numérotation.

3. Dispositif selon la revendication 2, caractérisé en ce que chaque module (1) est constitué par deux coques indépendantes emboitables (1a) (1b), l'une (1a) prenant appui sur le sommier, l'autre (1b) recevant le matelas, les éléments supports (3) des capteurs (2) étant fixés entre les deux coques (1a) (1b).

4. Dispositif selon la revendication 3, caractérisé en ce que chaque élément support (3) est en deux parties indépendantes (3a) (3b), fixées d'une manière rigide de part et d'autre des capteurs (2), chacune de ces parties (3a) (3b) étant solidaire avec capacité de micro-déplacements et de micro-rotations de la coque correspondante (1a) (1b) du module considéré.

5. Dispositif selon la revendication 1, caractérisé en ce que chaque module (1) comprend deux capteurs (2) disposés longitudinalement à proximité de ses bords latéraux afin de dégager de tout élément métallique, la plus grande surface possible du module.

6. Dispositif selon la revendication 1, caractérisé en ce que les modules (1) sont reliés par des bandes souples (5).

7. Dispositif selon la revendication 1, caractérisé en ce que la coque inférieure (1a) de chaque module (1), coopérant en appui sur le sommier, présente des moyens d'anti-glissement.

8. Dispositif selon la revendication 1, caractérisé en ce que l'ensemble comprend un module (1) correspondant à la tête du sommier, un module (1) correspondant au pied du sommier et un ou plusieurs modules (1) correspondant à la ou aux parties reliant la tête et les pieds du sommier.

9. Dispositif selon la revendication 4, caractérisé en ce que les parties constitutives (3a) (3b) de chaque élément support de capteur sont fixés sur les coques au moyen d'une liaison constituée par un matériau viscoélastique de faible raideur, notamment au moyen d'un ruban adhésif double face (4).

10. Dispositif selon la revendication 1, caractérisé en ce que chaque coque (1a) (1b) est obtenue par moulage d'une matière plastique et présente des nervures de rigidité.

11. Dispositif selon la revendication 1, caractérisé en ce qu'il est asservi à un système électronique de traitement de l'information des capteurs, conformé pour donner le poids total du patient et son évolution ou pour donner le poids et son évolution relevé au niveau de chaque module.

## Claims

1. System for weighing a person confined to bed characterised in that it comprises several modules (1) that are flexibly joined together in order to substantially match the geometrical shape of a hinged bed frame, each module (1) being equipped with at least one sensor (2) capable of performing, in combination, the weighing function.

2. System as claimed in claim 1 characterised in that each module is equipped with several sensors (2), each sensor (2) being rigidly attached on a mounting (3) fixed to the corresponding module (1) with the capacity for micro displacement and numbering.

3. System as claimed in claim 2 characterised in that each module (1) consists of two independent nestable shells (1a) (1b), one shell (la) resting on the bed frame, the other shell (1b) supporting the mattress, the mountings (3) for the sensors (2) being fixed between the two shells (1a) (1b).

4. System as claimed in claim 3 characterised in that each mounting (3) is made of two independent parts (3a) (3b) rigidly attached either side of the sensors (2), each of these parts (3a) (3b) being connected to the corresponding shell (1a) (1b) of the module in question with the capacity for micro displacement and micro rotation.

5. System as claimed in claim 1 characterised in that each module (1) comprises two sensors (2) arranged longitudinally close to its lateral edges in order to make the largest possible surface area of the module free of any metal component.

6. System as claimed in claim 1 characterised in that the modules (1) are linked by flexible straps (5).

7. System as claimed in claim 1 characterised in that the lower shell (la) of each module (1) that rests on the bed frame has non-slip features.

8. System as claimed in claim 1 characterised in that the assembly comprises one module (1) corresponding to the head of the bed frame, one module (1) corresponding to the foot of the bed frame and one or more modules (1) corresponding to the part or parts that link the head and the foot of the bed frame.

9. System as claimed in claim 4 characterised in that the component parts (3a) (3b) of each sensor mounting element are attached to the shells by means of a link consisting of a visco-elastic material of low rigidity, especially by means of double-sided adhesive tape (4).

10. System as claimed in claim 1 characterised in that each shell (1a) (1b) is obtained by moulding a plastic and has reinforcing ribs.

11. System as claimed in claim 1 characterised in that it is linked to an electronic system for processing signals from the sensors devised to indicate the total weight of the patient and changes in this weight or to indicate the weight and changes in the weight recorded at the level of each module.

## Patentansprüche

1. Wiegevorrichtung für bettlägerige Personen, dadurch gekennzeichnet, daß sie mehrere Module (1) umfaßt, die mit Gelenken untereinander verbunden sind, um sich ziemlich genau an die geometrische Form eines Gelenk-Bettrostes anzupassen, wobei jedes Modul (1) mit mindestens einem Meßsensor (2) ausgerüstet ist, der - in Kombination - die Wiegefunktion übernehmen kann.

2. Vorrichtung nach Anspruch 1, dadurch gekennzeichnet, daß jedes Modul mit mehreren Sensoren (2) ausgerüstet ist, wobei jeder Sensor (2) fest auf einem Trägerelement (3) angebracht ist, das auf dem entsprechenden Modul (1) angebracht ist, mit der Kapazität Mikroverschiebungen und Numerierung.

3. Vorrichtung nach Anspruch 2, dadurch gekennzeichnet, daß jedes Modul (1) aus zwei unabhängigen ineinandergreifenden Schalen (1a)(1b) besteht, wobei die eine (1a) auf dem Bettrost aufruht, die andere (1b) die Matratze aufnimmt und die Trägerelemente (3) der Sensoren (2) zwischen den beiden Schalen (1a)(1b) angebracht sind.

4. Vorrichtung nach Anspruch 3, dadurch gekennzeichnet, daß jedes Trägerelement (3) aus zwei unabhängigen Teilen (3a)(3b) besteht, die fest auf beiden Seiten der Sensoren (2) angebracht sind, wobei jedes dieser Teile (3a)(3b) solidarisch ist, mit der Kapazität Mikroverschiebungen und Mikrorotationen, mit der entsprechenden Schale (1a)(1b) des betroffenen Moduls.

5. Vorrichtung nach Anspruch 1, dadurch gekennzeichnet, daß jedes Modul (1) zwei Sensoren (2) umfaßt, die in Längsrichtung in Nähe der seitlichen Ränder angeordnet sind, um die größtmögliche Oberfläche des Moduls von jedem metallenen Element fernzuhalten.

6. Vorrichtung nach Anspruch 1, dadurch gekennzeichnet, daß die Module (1) mit Hilfe von Elastikbändern (5) untereinander verbunden sind.

7. Vorrichtung nach Anspruch 1, dadurch gekennzeichnet, daß die untere Schale (1a) jedes Moduls (1), die auf dem Bettrost aufruht, Antigleitmittel aufweist.

8. Vorrichtung nach Anspruch 1, dadurch gekennzeichnet, daß das Ganze ein Modul (1) umfaßt, das dem Kopfende des Bettrostes, ein Modul (1), das dem Fußende des Bettrostes entspricht und ein oder mehrere Module (1), die dem bzw. den Teil(en) entspricht (entsprechen), die das Kopf- und das Fußende des Bettrostes untereinander verbinden.

9. Vorrichtung nach Anspruch 4, dadurch gekennzeichnet, daß die jedes Sensor-Trägerelement bildenden Teile (3a)(3b) auf den Schalen mit Hilfe einer Verbindung angebracht sind, die aus viskoelastischem Material geringer Steife besteht, insbesondere mit Hilfe eines doppelseitigen Klebebandes (4).

10. Vorrichtung nach Anspruch 1, dadurch gekennzeichnet, daß jede Schale (1a)(1b) durch das Formen von Kunststoff erhalten wird und Versteifungsrippen aufweist.

11. Vorrichtung nach Anspruch 1, dadurch gekennzeichnet, daß sie von einem Elektroniksystem zur Verarbeitung der Informationen der Sensoren gesteuert wird, das so aufeinander abgestimmt ist, daß es das Gesamtgewicht der Person und dessen Entwicklung oder das auf jedem Modul abgelesene Gewicht und dessen Entwicklung angibt.
